# EUROPEAN PATENT SPECIFICATION

(11) **EP 1 248 926 B1**
(45) Date of publication and mention of the grant of the patent: **20.04.2005**
(21) Application number: 01906408.8
(22) Date of filing: 22.01.2001
(51) Int. Cl.: F16L 15/00, F16L 19/00

(54) **SOCKET AND COUPLING PIECE**
ROHRMUFFE UND KUPPLUNGSSTüCK
DOUILLE ET PIECE DE COUPLAGE

(30) Priority: 20.01.2000 NL 1014138
(43) Date of publication of application: 16.10.2002
(73) Proprietor: Schoonen, Marinus Henricus Maria, 3315 RB Dordrecht (NL)
(72) Inventor: SCHOONEN, Marinus, Henricus, Maria, NL-3315 RB Dordrecht (NL); SLOFF, Renske, Anne, NL-3315 RB Dordrecht (NL)
(74) Representative: van Westenbrugge, Andries
(86) International application number: PCT/NL2001/000041
(87) International publication number: WO 2001/057425

(56) References cited:
- WO-A-94/11664
- DE-A- 3 927 436
- FR-A- 806 400
- GB-A- 1 008 224
- US-A- 3 489 445

## Description

The present invention relates to a socket to be fitted on a pipe, comprising a sleeve-shaped part provided with a accomodation for said pipe and an internal screw thread for engaging on said pipe.

A socket of this type is generally known in the state of the art and can be constructed with two ends to form a coupling piece. This is used, for example, for joining conduits that are provided with a screw thread. With this arrangement the thread is provided on the free end of the conduits and the socket is screwed onto said thread. The external diameter of the socket is greater than the external diameter of the pipe or conduit concerned which has been provided with the thread.

This means that a completely smooth whole is not obtained. In some applications a smooth join between two pipes is essential. One example is pipelines in greenhouses. These are frequently used for moving so-called pipe trolleys over them, the wheels moving along the pipes. It will be understood that with such an application differences in the diameter of the pipe as a consequence of coupling pieces and the like are inadmissible.

It is for this reason that currently the majority of pipes are joined to one another by welding. This welding is carried out in the greenhouse. The working conditions there are generally disadvantageous and the government is imposing increasingly more stringent requirements with regard to the working environment, with the result that this welding is becoming increasingly more difficult to carry out. Apart from the welding itself, that is to say the fumes generated by this, there is the problem of protecting the exterior of the pipes against corrosion. In general, such pipes are supplied in various ways. Firstly it in possible to provide the pipe with a corrosion-resistant coating over its entire length. However, problems arise at the point where welding has to take place. Galvanising is in general not permitted because the (zinc) vapours produced during welding are harmful to health. Another possibility is to supply the pipe with so-called paint-free ends.

In any event it is necessary after welding to treat the weld location separately with a corrosion-resistant agent. Depending on the protection, the option frequently chosen is to provide this entire pipe with a further corrosion-resistant coating. It will be understood that conditions in a greenhouse are for from optimum and that the use of certain methods of protection is not possible or is not permissible in greenhouses.

US 3 489 445 A discloses a joint (Fig. 3) between two solid rods. One of the rods is provided with a bore with internal thread, whilst the other rod is provided with a stepped-down end with extend thread. As in the case of certain bolt constructions, the thread is not directly at the start of the bore but some distance away from this. In the intervening section there is an appreciable gap between the bore and the stepped-down end of the other rod. WO 94/11664 discloses a socket consisting of an internal threaded section. A conical surface is provided close to the end of the socket. However, this surface extends over a very small portion of the thickness of the socket wall so that a smooth transition would not be produced if a corresponding conical section of a pipe were to be screwed in contact with this.

The aim of the present invention is to provide a joint between two pipes, which joint is, of course, firstly watertight because such pipes are used for the purposes of heating by means of water. Secondly, the aim is to make the joint smooth so that it is possible for pipe trolleys to travel over it. Thirdly, the aim of the invention is to implement the various features without welding, so that it is possible to provide pipes provided with a corrosion-resistant coating over their entire length and for which no or hardly any after-treatments are needed.

This aim in realised with a socket as described above in that the length (b) of said accomodation at least corresponds to the length (a) of said screw thread and in that the entry opening of said accomodation is provided with a conically tapering section, which conically tapering section extends essentially over the entire thickness of the wall of said socket.

It has been found that the sockets or stop-ends known from the prior art are in no way suitable for fitting a coupling with screw thread on pipe sections which are used in greenhouses. After all, such pipe sections are of appreciable length and appreciable weight. A weight of approximately 25 kg and a length of 6 metres may be mentioned by way of example. If one pipe is provided with a socket or coupling piece it is impossible to fit the other pipe in a socket according to the prior art. This is possible by use of the lead-in section according to the invention. Accurate centring is achieved by means of the appreciable length of the accomodation. Sliding into one another in the accomodation is relatively simple.

Seating is in any event produced by the engagement of the conically tapering section of the socket and the conesponding pipe section. Further sealing means can optionally be present. Such seals can, for example, comprise a seal acting on the end of the pipe. It is also possible to fit one or more O-rings between the pipe and the accomodation.

With the construction described above a smooth transition between socket and pipe is ensured, as a result of which pipe trolleys and the like can be moved over such constructions without inconvenient jolting.

However, it must be understood that the joint described here also has other applications. For example, consideration can be given to coupling pieces for railings and the like where a smooth transition is likewise of importance.

The socket described above can be constructed as a single socket. This can have a stop-end for closing off a pipe section. Furthermore it is possible to fit further facilities on the end face, for joining to other systems.

It is, however, also possible to integrate two or more such sockets. Coupling pieces, angle pieces, T-connectors, etc. are produced in this way. With such embodimenis it is advantageous if stops are present which limit the maximum extent to which the pipe can be screwed in. That is to say, apart from the stop formed by the conically tapering section there is a further stop for the pipes at the entry to the accomodation. It will be understood that in connection with production tolerances the stops located inside the coupling piece will not always be functional.

If there is more than one thread, such as, for example, in the coupling piece, it is preferable to use different types of thread. If a left-hand and a right-hand thread are used in a straight coupling piece and the pipe sections are provided with corresponding left-hand and right-hand thread, it suffices to push the pipes towards one another when inserting the coupling piece according to the invention between them. As a result of the accurate centring with the accomodation according to the invention, it is possible to start the join between the two pipe sections via the coupling piece by exerting some further pressure and turning the coupling piece. Further turning of the coupling piece can provide a firm joint between the pipe sections. In order to obtain the completely smooth appearance of the socket/pipe combination that has been described above, it is proposed according to the invention to provide the pipes concerned with a stepped-down, tapering end. If this is produced by butting, for example, the thickness of the wall at the end will as a result automatically increase compared with the wall thickness of the remainder of the pipe. This increase in wall thickness is advantageous because the thread has to be made in this section. To keep the thread of restricted depth the use of a relatively fine thread, such as a metric fine thread, is proposed. There is a transition section between the section of smaller pipe diameter and the main diameter. According to the invention this is preferably constructed correspondingly to the conical section by the accomodation of the socket. By this means it is possible to achieve a joint between the socket and the pipe section concerned that not only provides a very good seal but also provides very good clamping. It has been found that after the socket and the pipe section constructed in this way have been screwed tight by hand unscrewing by hand is no longer possible. Tools are needed for this.

Aids for such tools can, of course, be present for final tightening. One example is a hole in which a hook spanner can be inserted in order to turn the socket. If a coupling piece is used, such a blind hole is preferably made at the location of the shoulder so that the weakening of the material as a result of the bole is not important.

The conical angle of the opening in the accomodation is preferably between 15 and 45° and more particularly is approximately 30°.

Other fixing means could also be used instead of the abovementioned screw thread in a device not falling within the scope of the claims. In this context any construction possible in the state of the art, such as gluing, would be conceivable. Accordingly, snap-fit means or the like could be used for this purpose. That is to say, the pipe could be provided with some sort of resilient ring, for example extending outwards in a groove in the pipe, which ring would be able to snap into a corresponding recess in the interior of the socket. Such snap-fit means could be arranged either upstream or downstream or in the accomodation component.

The invention also relates to a method for the production of a pipe string, comprising the provision of at least three pipe sections joined to one another by at least two coupling pieces, wherein in order to tighten the joint from one end a rotary force is applied to the string while restraining at least one of said coupling pieces.

With the aid of the invention it is possible to use pipes and coupling pieces which have been provided beforehand with a complete corrosion-resistant coating. Further treatment is not required after fitting. Moreover, it will be understood that the production of joints between two pipes can be carried out by an untrained person under any conditions, both indoors and out. This is in contrast to the welding described above. Moreover, it will be understood that if angle pieces, T-pieces and the like are used, in combination with the pipe sections, any desired embodiment of pipeline systems can be produced. That is to say, U-bends, cross-overs, couplings and similar constructions that can be envisaged in the state of the art can be produced using the coupling pieces/sockets according to the invention.

The invention will be explained in more detail below with reference to illustrative embodiments shown in the drawing. In the drawing:
Fig. 1 shows, diagrammatically in cross-section, a coupling piece and pipe before fitting;
Fig. 2 shows two pipes and the coupling piece according to Fig. 1 during fitting;
Fig. 3 shows coupling piece and pipes after fitting;
Fig. 4 shows a stop-end;
Fig. 5 shows an angle piece according to the invention; and
Fig. 6 shows a further variant of the construction not within the scope of protection of claim 1.

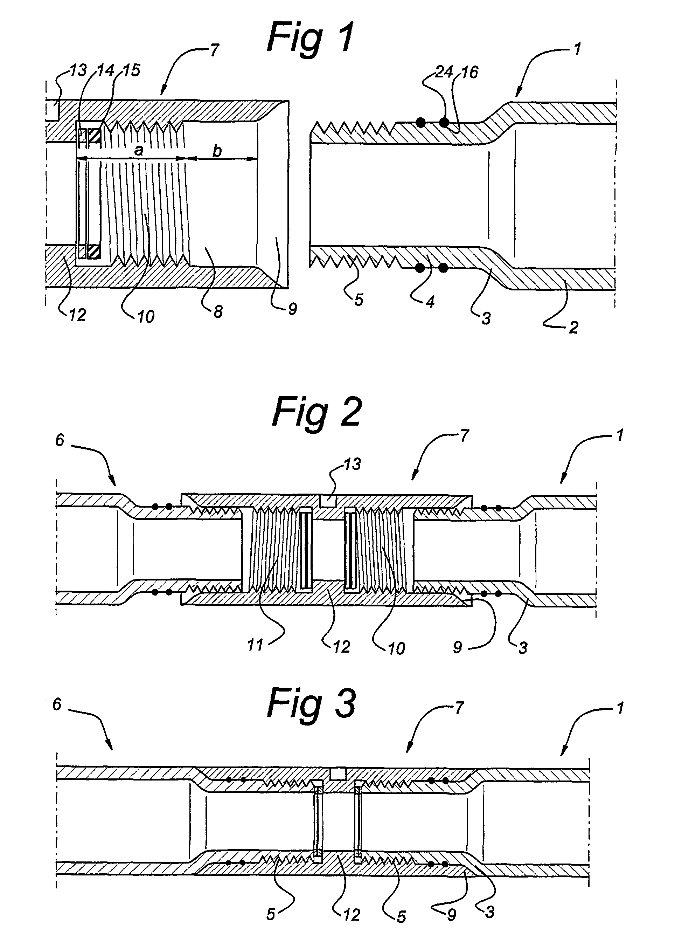

In Fig. 1 a pipe is indicated by 1. Such a pipe can be used, for example, for heating purposes. This pipe can have any length and diameter customary in the state of the art, of, for example, 6, 9 or 10 m and 10-120 mm, respectively. The section of the pipe that has the main diameter is indicated by 2. Via a transition section 3 the end of the pipe is provided with a stepped-down section of smaller diameter, which section is indicated by 4. The wall thickness of, for example, 2.25 mm is locally somewhat greater and a screw thread 5 of low thread depth, for example metric fine thread with a pitch of, for example, 1.5 mm, is made in this thicker wall. Grooves 16 for receiving O-rings 24 are made in the stepped-down section 4.

Part of the coupling piece according to the invention is indicated by 7 in Fig. 1. This coupling piece consists of a lead-in section or accomodation 8 of length b, which merges into a conical section 9 towards the free end. A screw thread 10 of length a is provided adjacent to the other end of the lead-in section or accomodation. Thread 10 is followed by a thickening in the material, or shoulder, 12 in which a hole 13 has been made in which a hook spanner can engage. A further screw thread 11 has been made adjoining this shoulder. This thread is followed by a further lead-in section or accomodation 8, which is adjoined by a conical section 9. In the embodiment shown in Figs 1-3 the winding of thread 10 is opposite to that of thread 11. Obviously, thread 10 corresponds to thread 5 on pipe 1. A thrust washer 14 and a seal 15, bearing against the latter, are arranged at the end of thread 10.

It is shown in Fig. 2 that a further pipe 6 is also present. This is, of course, provided at the end with thread that corresponds to thread 11.

It can be seen from Fig. 2 that accurate centring of the threaded section 5, that is to say the end of the pipe with respect to the thread, and of threaded section 11 is possible of the pipes according to the invention is often appreciable. If there were no such centring facility it is virtually certain that attachment of the coupling piece to the pipe section concerned would not be straight, which would result, on the one hand, in leakage and, on the other hand, in destruction of the threaded section.

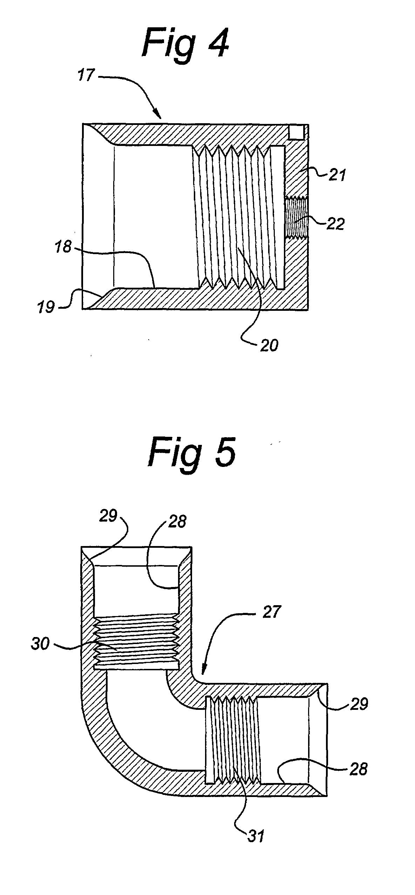

Fig. 3 shows the final situation in which the coupling piece and the pipes 1, 6 are firmly joined to one another. It can be seen from this figure that the conicity of the opening indicated by 9 corresponds to the conicity of the transition section. 3. A sealing effect is provided as a result. Stop 12 can optionally serve for further sealing, for example by fitting an O-ring or other sealing means therein.

It can be seen from Fig. 3 that a completely smooth whole is obtained. Furthermore, it can be seen from this figure that the various material thicknesses are so chosen that the joint between the two pipes 1 and 6 is not the weakest link in the pipe string. After the joint has been produced, sealing takes place, both by means of the sealing ring 15 and the from end of the stepped-down section 4 provided with thread 5 and by means of the two O-rings 24 and the lead-in section 8. It will be understood that one or more of these seals could be omitted. Shoulder 12 is likewise not needed in all embodiments. If no sealing whatsoever is required, for example when producing railing constructions, all these seals can be omitted. Similarly, other sealing constructions, such as employing tape, liquid sealant and the like, can be used.

Fig. 4 shows a stop-end, which is indicated in its entirety by 17. This stop-end is likewise provided with a accomodation or lead-in section 18, delimited at one end by a conical section 19 and delimited at the other end by a screw thread 20. In contrast to the previous embodiment, this thread 20 is adjoined not by a stop but by an end plate 21 in which a hole 22 has been drilled for coupling to further joints. Of course, the various features can also be constructed so that they are closed off.

Fig. 5 shows an angle piece. This is indicated in its entirety by 27 and consists of two socket components that are in fluid communication with one another. 28 indicates the lead-in or accomodation section that at one end opens into a conical section 29 and at the other end into a screw thread 30 and 31, respectively. With this embodiment thread 30 can be of opposite pitch to thread 31. Coupling of two pipe sections takes place simply by moving said two pipe sections towards one another incorporating the coupling piece as shown in Fig. 2 between them. A firm joint between the pipe sections can then be provided by turning coupling piece 7. It is, of course, also possible to make one of the pipe sections by turning coupling piece 7. It is, of course, also possible to make one of the pipe sections turn, in which case the coupling piece concerned has to be restrained. In this way it is possible to couple a string of pipes by, from one end, driving the pipe in rotary motion and successively restraining various coupling pieces.

In the latter case it is, of course, also possible to make all threads either left-handed or right-handed. With this arrangement it is no longer necessary to restrain the coupling pieces when assembling a pipe string. It will be understood that the 90° angle shown is one example only.

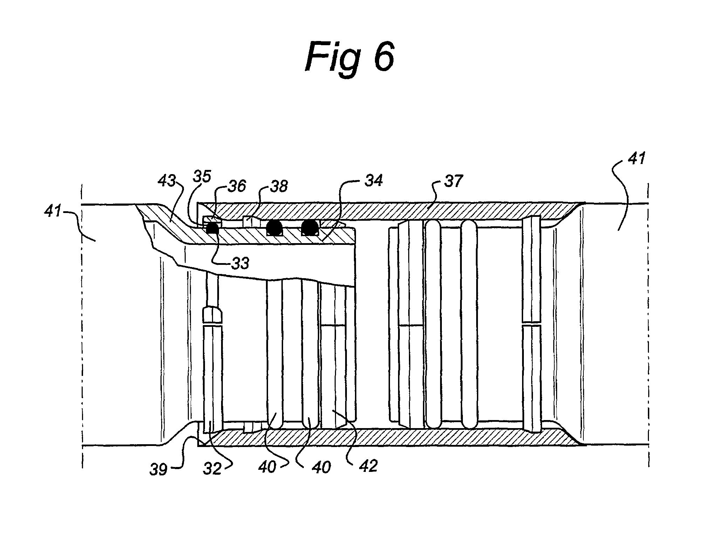

A further variant of the structure is shown in Fig. 6. This embodiment is not within the scope of protection of claim 1. In this figure the pipe is indicated by 41 and the coupling piece by 37. The conical section described above is present in this embodiment also and is indicated by 39 for the conical coupling piece and by 43 for the pipe. In this embodiment the coupling piece 37 is of smooth construction except for an annular recess 38. The shape thereof corresponds to the shape of a resilient ring 32 that is attached in some way or other to the stepped-down section 34 of pipe 41. In the embodiment shown here, fixing takes place by making an annular groove 33 in which a compressible element such as an O-ring 35 is fitted. The resilient ring 32, on the other hand, is provided with an internal groove 36 for receiving the O-ring 35. As a result the resilient ring 32 can be pressed inwards in order to move it past the smallest internal diameter of the coupling piece 37 and when it reaches annular recess 38 it snaps into this recess 38 under its own resilient force and/or the force of the O-ring 35 and coupling is achieved. Sealing takes place with the aid of O-rings 40. A lead-in section 42 is also present, as a result of which centring of the stepped-down section 34 with respect to the socket is possible.

It can be seen from this latter variant that many modifications are possible without going beyond the concept of the present invention. Of course, instead of the centring section 42, the external diameter of the stepped-down section 34 can, as in the previous embodiments, have been adapted essentially to correspond to the internal diameter of the coupling piece 37. Similarly, in the embodiment according to Fig. 6 the O-rings can be replaced by a different seal. The resilient ring 32 can also be arranged in a different position in the stepped-down section 34, for example instead of the centring section 42. As in the case of the embodiments described above, a stop shoulder can be present.

These and further modifications, for the stop-ends and angle pieces as well, are obvious to those skilled in the art after reading the above description and are within the

## Claims

1. Socket (7; 17; 27) to be fitted on a pipe (1; 6), comprising a sleeve-shaped part provided with an accomodation (8; 18; 28) for said pipe and an internal screw thread (10; 20; 30; 31) for engaging on said pipe, **characterised in that** the length (b) of said accomodation at least corresponds to the length (a) of said screw thread and **in that** the entry opening of said accomodation is provided with a conically tapering section (9; 19; 29), said conically tapering section extending essentially over the entire thickness of the wall of said socket.

2. Socket according to Claim 1, comprising a stop-end (17).

3. Socket according to one of the preceding claims having sealing means arranged close to the and of the threaded section and away from the accomodation.

4. Coupling piece (7; 27) comprising two sockets according to the preceding claims joined to one another, wherein there is fluid communication between said accomodations.

5. Coupling piece according to Claim 4, having a stop (12), located between said sockets, for said pipe.

6. Coupling piece according to one of Claims 4 or 5, wherein the two internal threaded sections (10; 11; 30; 31) are of opposing winding.

7. Socket/pipe assembly comprising a socket according to one or more of the prceding claims and a pipe (1, 6), which pipe is provided with an end (4) of a diameter smaller than the diameter of the main section (2) of said pipe, which end is provided with screw thread that can be brought into engagement with the screw thread of said socket, the external diameter of that part of the end that is not provided with screw thread essentially corresponding to the internal diameter of said accomodation.

8. Socket/pipe assembly according to Claim 7, wherein the transition (3) between the smaller diameter of said pipe and the main diameter thereof essentially corresponds to the conical opening in said accomodation.

9. Socket/pipe assembly according to Claim 7, wherein the external diameter of said pipe essentially corresponds to the external diameter of said coupling piece.

10. Socket/pipe assembly according to Claim 9, wherein said conical angle of said opening is between 15 and 45°.

11. Socket/pipe assembly according to one of Claims 9 or 10, wherein said coupling piece is provided with means for engagement of tools.

12. Method for the production of a pipe string, comprising the provision of at least three pipe sections joined to one another by at least two coupling pieces according to claim 4, **characterised in that** in order to tighten the joint from one end a rotary force is applied to the string while restraining at least one of said coupling pieces.

## Patentansprüche

1. Muffe (7; 17; 27), die auf ein Rohr (1; 6) aufzupassen ist, umfassend einen hülsenförmigen Teil, der mit einer Aufnahme (8; 18; 28) für das Rohr versehen ist, und ein Innenschraubengewinde (10; 20; 30; 31) zum Eingriff auf dem Rohr, **dadurch gekennzeichnet, dass** die Länge (b) der Aufnahme mindestens der Länge (a) des Schraubengewindes entspricht und dass die Eintrittsöffnung der Aufnahme mit einem konisch verlaufenden Abschnitt (9; 19; 29) versehen ist, wobei sich der konische verlaufende Abschnitt im Wesentlichen über die ganze Dicke der Wand der Muffe erstreckt.

2. Muffe nach Anspruch 1, umfassend ein Anschlagende (17).

3. Muffe nach einem der vorangehenden Ansprüche mit Dichteinrichtungen, die nahe am Ende des Gewindeabschnitts und weg von der Aufnahme angeordnet sind.

4. Kupplungsstück (7; 27), umfassend zwei Muffen gemäß den vorangehenden Ansprüchen, die miteinander verbunden sind, wobei es eine Fluidverbindung zwischen den Aufnahmen gibt.

5. Kupplungsstück nach Anspruch 4 mit einem zwischen den Muffen angeordneten Anschlag (12) für das Rohr.

6. Kupplungsstück nach einem der Ansprüche 4 oder 5, bei dem die zwei Innengewindeabschnitte (10; 11; 30; 31) von entgegengesetzter Windung sind.

7. Muffen/Rohr-Anordnung, umfassend eine Muffe nach einem oder mehreren der vorangehenden Ansprüche und ein Rohr (1, 6), welches Rohr mit einem Ende (4) von einem Durchmesser versehen ist, der kleiner als der Durchmesser des Hauptabschnitts (2) des Rohrs ist, welches Ende mit einem Schraubengewinde versehen ist, das in Eingriff mit dem Schraubengewinde der Muffe gebracht werden kann, wobei der Außendurchmesser desjenigen Teils des Endes, der nicht mit einem Schraubengewinde versehen ist, im Wesentlichen dem Innendurchmesser der Aufnahme entspricht.

8. Muffen/Rohr-Anordnung nach Anspruch 7, bei der der Übergang (3) zwischen dem kleineren Durchmesser des Rohrs und dem Hauptdurchmesser desselben im Wesentlichen der konischen Öffnung in der Aufnahme entspricht.

9. Muffen/Rohr-Anordnung nach Anspruch 7, bei der der Außendurchmesser des Rohrs im Wesentlichen dem Außendurchmesser des Kupplungsstücks entspricht.

10. Muffen/Rohr-Anordnung nach Anspruch 9, bei der der konische Winkel der Öffnung zwischen 15 und 45° liegt.

11. Muffen/Rohr-Anordnung nach einem der Ansprüche 9 oder 10, bei der das Kupplungsstück mit Einrichtungen zum Eingriff von Werkzeugen versehen ist.

12. Verfahren zur Erzeugung eines Rohrstrangs, umfassend die Bereitstellung von mindestens drei Rohrabschnitten, die miteinander durch mindestens zwei Kupplungsstücke nach Anspruch 4 verbunden werden, **dadurch gekennzeichnet, dass**, um die Verbindung von einem Ende festzuziehen, eine Drehkraft auf den Strang ausgeübt wird, während mindestens eines der Kupplungsstücke eingespannt wird.

## Revendications

1. Manchon (7 ; 17 ; 27) à monter sur un tuyau (1 ; 6), comprenant une partie en forme de douille pourvue d'un logement (8 ; 18 ; 28) pour ledit tuyau et d'un filetage intérieur (10 ; 20 ; 30 ; 31) à mettre en prise sur ledit tuyau, **caractérisé en ce que** la longueur (b) dudit logement correspond au moins à la longueur (a) dudit filetage et **en ce que** l'ouverture d'entrée dudit logement est pourvue d'une partie conique (9 ; 19 ; 29), ladite partie conique s'étendant sensiblement sur toute l'épaisseur de la paroi dudit manchon.

2. Manchon selon la revendication 1, comprenant une butée d'arrêt (17).

3. Manchon selon une des revendications précédentes, ayant un moyen d'étanchéité disposé près de l'extrémité de la partie filetée et à distance du logement.

4. Pièce de raccordement (7 ; 27) comprenant deux manchons selon les revendications précédentes réunis l'un à l'autre, dans laquelle il y a une communication de fluide entre lesdits logements.

5. Pièce de raccordement selon la revendication 4, ayant une butée (12), située entre lesdits manchons, pour ledit tuyau ;

6. Pièce de raccordement selon l'une quelconque des revendications 4 et 5, dans laquelle les deux parties filetées (10 ; 11 ; 30 ; 31) ont des pas opposés.

7. Ensemble manchon/tuyau, comprenant un manchon selon une ou plusieurs des revendications précédentes et un tuyau (1 ; 6), lequel tuyau est pourvu d'une extrémité (4) d'un diamètre plus petit que le diamètre de la partie principale (2) dudit tuyau, laquelle extrémité est pourvue d'un filetage qui peut être mis en prise avec le filetage dudit manchon, le diamètre extérieur de la partie de l'extrémité non pourvue d'un filetage correspondant sensiblement au diamètre intérieur dudit logement.

8. Ensemble manchon/tuyau selon la revendication 7, dans lequel la transition (3) entre le diamètre le plus petit dudit tuyau et le diamètre principal de celui-ci correspond sensiblement à l'ouverture conique présente dans ledit logement.

9. Ensemble manchon/tuyau selon la revendication 7, dans lequel le diamètre extérieur dudit tuyau correspond sensiblement au diamètre extérieur de ladite pièce de raccordement.

10. Ensemble manchon/tuyau selon la revendication 9, dans lequel l'angle de conicité de ladite ouverture est de 15 à 45°.

11. Ensemble manchon/tuyau selon l'une quelconque des revendications 9 et 10, dans lequel ladite pièce de raccordement est pourvue de moyens pour l'engagement d'outils.

12. Procédé pour fabriquer un train de tuyaux, comprenant la réalisation d'au moins trois tronçons de tuyaux réunis les uns aux autres par au moins deux pièces de raccordement selon la revendication 4, **caractérisé en ce que**, pour serrer la jonction depuis une extrémité, une force de rotation est appliquée au train tout en retenant au moins une desdites pièces de raccordement.
